# EUROPEAN PATENT APPLICATION

(11) **EP 3 608 999 A1**
(43) Date of publication of application: **12.02.2020**
(21) Application number: 18188267.1
(22) Date of filing: 09.08.2018
(51) Int. Cl.: H01M 4/04, H01M 4/133, H01M 4/36, H01M 4/587, H01M 4/62, H01M 10/0525

(54) **GRAPHENE COMPOSITE FILM MODIFIED BY SINGLE CRYSTAL SAPPHIRE WHISKERS AS WELL AS PREPARATION METHOD AND APPLICATION THEREOF**

(71) Applicant: Research Institute of Tsinghua University in Shenzhen, 518055 Shenzhen Guangdong (CN); Harbin Institute of Technology Shenzhen Graduate School, 518057 Shenzhen Guangdong (CN)
(72) Inventor: MA, Qing, Shenzhen, Guangdong 518057 (CN); LUO, Zhiyuan, Shenzhen, Guangdong 518057 (CN); JI, Shishan, Shenzhen, Guangdong 518055 (CN); LIU, Renchen, Shenzhen, Guangdong 518055 (CN); LIU, Yan, Shenzhen, Guangdong 518055 (CN); WANG, Zhen, Shenzhen, Guangdong 518055 (CN)
(74) Representative: Gong, Jinping

(57) **Abstract**

The invention discloses a graphene composite film modified by single crystal sapphire whiskers as well as a preparation method and application thereof. The graphene composite film provided by the invention comprises graphene and single crystal sapphire whiskers, the single crystal sapphire whiskers and the graphene are dispersed in the graphene composite film, and the content by weight of the graphene is greater than that of the single crystal sapphire whiskers. The graphene composite film can be used to prepare an electrode and applied to lithium ion batteries and capacitors. The graphene composite film has excellent toughness, structural stability and folding resistance as well as excellent electroconductivity and thermoconductivity; and the preparation method thereof is good in reproducibility and low in cost. The electrode has stable structure, low internal resistance, and excellent electroconductivity, thermoconductivity, cycle performance and rate performance during usage as well as charging and discharging.

## Description

### BACKGROUND OF THE INVENTION

### Technical Field

The invention belongs to the technical field of batteries, and in particular to a graphene composite film modified by single crystal sapphire whiskers as well as a preparation method and application thereof.

### Description of Related Art

With excellent performances such as high voltage, high energy density and long cycle life, lithium ion batteries have been widely applied to the batteries of mobile phones and notebook computers, power batteries, energy storage batteries and the like. Moreover, the batteries of the mobile phones and notebook computers have been completely occupied by the lithium ion batteries, and other types of batteries simply cannot meet the stringent requirements of these portable smart devices. As the lithium ion batteries are becoming more widely available, the requirements for the lithium ion batteries are also increasing. For example, the requirements on the performances such as energy density of the lithium ion batteries are also increasing.

Capacitors, such as supercapacitors (or electrochemical capacitors), are a new type of energy storage devices between traditional capacitors and secondary batteries, and have the advantages of high power density, high charging/discharging speed, long cycle life, low maintenance cost and the like. The supercapacitors have greater energy density than the traditional dielectric capacitors and higher power density than the batteries, and have broad application prospects in the fields such as emergency power supplies, hybrid power, digital products, and electronic communications. Compared with a traditional capacitor, the capacitance value of a supercapacitor is far higher than that of the traditional capacitor.

According to the structural characteristics of the energy storage devices such as the lithium ion batteries and the capacitors, the electrode is one of the important components that affect them. At present, in order to improve the relevant performances of the electrode for improving the relevant performances of the corresponding energy storage device, for example, by virtue of the characteristics such as excellent electroconductivity and thermoconductivity of graphene, a graphene film is used in the electrode to improve the electrochemical performance of the corresponding energy storage device. In the actual application process, however, it is found that the mechanical properties such as the toughness of the graphene film are poor, resulting in that the graphene film layer is easy to break or unsatisfactory in folding performance, leading to poor structural stability of the electrode containing the graphene film, thereby leading to unstable electrochemical performance thereof.

### BRIEF SUMMARY OF THE INVENTION

One objective of the invention is to overcome the defects above in the prior art and provide a graphene composite film modified by single crystal sapphire whiskers and a preparation method thereof, in order to solve the technical problem that the existing graphene film is easy to break or unsatisfactory in folding performance due to unstable structure.

Another objective of the invention is to provide an electrode and an application method thereof, in order to solve the technical problem that the existing electrode is poor in structural stability to consequently affect the electric performance of the energy storage device.

To achieve the objectives above of the invention, one aspect of the invention provides a graphene composite film modified by single crystal sapphire whiskers. The graphene composite film comprises graphene and further comprises single crystal sapphire whiskers, wherein the graphene forms a substrate film layer, the single crystal sapphire whiskers are dispersed in the substrate film layer, and the content by weight of the graphene is greater than that of the single crystal sapphire whiskers.

Another aspect of the invention provides a preparation method of a graphene composite film modified by single crystal sapphire whiskers. The preparation method comprises the following steps:
dispersing single crystal sapphire whiskers into a graphene oxide solution to prepare a dispersion, wherein the concentration by weight of graphene oxide is greater than that of the single crystal sapphire whiskers;
forming a film from the dispersion to obtain a graphene oxide composite film; and
reducing the graphene oxide composite film.

A further aspect of an embodiment of the invention provides an electrode. The electrode comprises the graphene composite film of the invention or the graphene composite film prepared with the preparation method of the invention.

A further another aspect of the invention provides a method for applying the electrode of the invention. The electrode of the invention is applied to lithium ion batteries and capacitors.

Compared with prior art, the graphene composite film of the invention takes graphene as a base material, graphene sheet layers are stacked and combined with one another tightly to form a substrate film layer of the composite film, meanwhile, single crystal sapphire whiskers are dispersed in the graphene substrate film layer to achieve a synergistic interaction effect between the single crystal sapphire whiskers and the graphene substrate film layer for endowing the graphene composite film with excellent toughness, thereby increasing the structural stability and folding resistance of the graphene composite film. In addition, the graphene composite film is endowed with excellent electroconductivity and thermoconductivity based on the high temperature resistance of the graphene and single crystal sapphire whiskers.

The preparation method of the graphene composite film of the invention is effective for evenly dispersing the single crystal sapphire whiskers and evenly blending the same in the substrate film layer formed from the graphene, thereby achieving a synergistic interaction effect between the two to endow the prepared graphene composite film with excellent toughness, electroconductivity and thermal resistance at the same time. Furthermore, the preparation method of the invention has easily controllable conditions, can be used to prepare the graphene composite film with stable performance, and is low in cost and suitable for industrial mass production.

With the graphene composite film of the invention, the electrode of the invention has stable structure, low internal resistance, and excellent electroconductivity, thermoconductivity, cycle performance as well as rate performance during usage as well as charging and discharging, effectively broadening the application scope of the electrode of the invention and improving the electrochemical properties of corresponding products.

### BRIEF DESCRIPTION OF THE SEVERAL VIEWS OF THE DRAWINGS

The invention will be further illustrated below in conjunction with the attached drawings and embodiments, in which:

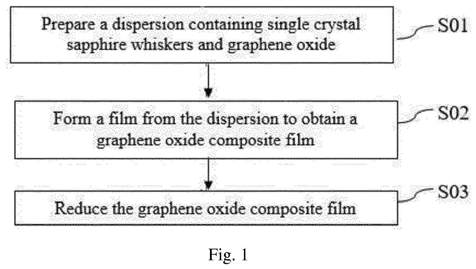

FIG. 1 is a flow chart of a preparation method of a graphene composite film modified by single crystal sapphire whiskers as provided by an embodiment of the invention.

### DETAILED DESCRIPTION OF THE INVENTION

To solve the technical problems, make clear and explicit the technical solutions and advantageous effects of the invention, the invention will be further illustrated below in detail in conjunction with the embodiments and attached drawings. It should be understood that the particular embodiments described herein are merely intended for explaining, instead of limiting, the invention.

In one aspect, an embodiment of the invention provides a graphene composite film with excellent toughness and thermal resistance. The graphene composite film comprises graphene and single crystal sapphire whiskers, wherein the graphene forms a substrate film layer, the single crystal sapphire whiskers are dispersed in the substrate film layer, and the content by weight of the graphene is greater than that of the single crystal sapphire whiskers. That is, the graphene is taken as a substrate component in the graphene composite film, and the graphene sheet layers are stacked and combined with one another tightly to form the substrate film layer of the composite film. Moreover, the single crystal sapphire whiskers contained in the graphene composite film are dispersed and blended in the substrate film layer of the graphene composite film. Therefore, excellent electroconductivity and thermoconductivity are exhibited by means of the graphene film layer, and the whisker characteristics of the particular crystal structure of the single crystal sapphire whiskers are exhibited, playing a role of reinforcing ribs, thereby endowing the graphene substrate film layer with excellent toughness and mechanical strength. Therefore, the graphene composite film achieves excellent toughness and mechanical strength by means of the synergistic interaction effect between the single crystal sapphire whiskers and the graphene substrate film layer, thereby increasing the structural stability and folding resistance of the graphene composite film, which meanwhile has excellent electroconductivity, thermoconductivity and thermal-resistant stability.

To increase the synergistic interaction effect between the graphene and the single crystal sapphire whiskers, a weight ratio of the single crystal sapphire whiskers to the graphene in one embodiment is [0.01-0.3]:1, and preferably [0.1-0.3]:1. Further, [] indicates being more than or equal to a lower limit and less than or equal to an upper limit, for example, [0.01-0.3] indicates being more than or equal to 0.01 and less than or equal to 0.3. By adjusting the content ratio of the two, the role of the single crystal sapphire whiskers is fully played to increase the toughness, mechanical strength and high-temperature stability of the graphene composite film, without compromising the electroconductivity of the graphene composite film.

Further, the size and number of the graphene sheet layer can be those of the conventional graphene, and preferably, the graphene with relatively increased sheet layer size is preferred. The size such as the diameter and length of the single crystal sapphire whiskers may also be that of the conventional single crystal sapphire whiskers, and the single crystal sapphire whiskers with larger length are preferred.

Based on all the embodiments above, the graphene composite film may also contain electroconductive polymer components. In the presence of the electroconductive polymer, the bonding strength between the graphene and the single crystal sapphire whiskers can be effectively enhanced to increase the toughness, flexibility and mechanical strength of the graphene composite film on one hand, and on the other hand, the electroconductive polymer plays a role of an electroconductive agent, thereby effectively reducing the internal resistance of the graphene composite film to increase the electroconductivity thereof. In one embodiment, the weight ratio of the electroconductive polymer to the graphene is controlled to be [0.05-0.5] :1, and preferably [0.1-0.5]:1. By optimizing the content of the electroconductive polymer, the toughness and electroconductivity of the graphene composite film are optimized. In a particular embodiment, the electroconductive polymer can be at least one selected from a group consisting of polyethylene oxide, polyethylene glycol succinate, polyethylene glycol imine, polyacetylene, polyphthalocyanine copper, polyaniline, poly (p-phenylene sulfide), thiophene, polypyrrole, and polyquinoline.

Of course, the electroconductive polymer can also be replaced with other electroconductive binders, such as inorganic electroconductive binders, or other organic binders, or inorganic electroconductive filler binders. In an embodiment, for example, the graphene composite film layer containing the electroconductive polymer is carbonized to carbonize the electroconductive polymer for generating electroconductive carbon in situ in the film layer, thereby sintering the graphene, the single crystal sapphire whiskers and the in-situ generated carbon into an integrated composite film layer.

Furthermore, the thickness of the graphene composite film in respective embodiments above can be adjusted as required by the application, for example, the thickness can be but not limited to 20µm-50µm. The relevant single crystal sapphire whisker described above is a kind of single crystal aluminum oxide whisker having certain aspect ratio. The single crystal sapphire whisker is a new type of inorganic material having very high comprehensive performance since it is high in melting point, strength, wear resistance and corrosion resistance.

Accordingly, an embodiment of the invention also provides a preparation method of the graphene composite film described above. A process flow of the preparation method of the graphene composite film is as show in FIG. 1, comprising the following steps:
Step S01, preparing a dispersion containing single crystal sapphire whiskers and graphene oxide, to be specific,
dispersing the single crystal sapphire whiskers into a graphene oxide solution to prepare the dispersion;
Step S02, forming a film from the dispersion to obtain a graphene oxide composite film; and
Step S03, reducing the graphene oxide composite film.

Specifically, to increase the mechanical properties such as toughness and strength of the prepared graphene composite film in Step S01, the amount of the single crystal sapphire whiskers dispersed in the graphene oxide solution is controlled in an embodiment, so that the weight ratio of the single crystal sapphire whiskers to the graphene oxide is [0.01-0.3]:1.

In a further embodiment, a step of adding the electroconductive polymer into the dispersion and fully dissolving the electroconductive polymer is also included in the process of preparing the dispersion. In an embodiment, the amount of the electroconductive polymer dissolved in the graphene oxide solution is controlled, so that the weight ratio of the electroconductive polymer to the graphene oxide is [0.05-0.5]:1.

To evenly disperse the single crystal sapphire whiskers and further effectively dissolve the electroconductive polymer, a step of adding a mixture solution of dimethylformamide, ethanol and polyglycol ether at a weight ratio of 10:[4-7]:[0.5-3] into the dispersion is also included in the process of preparing the dispersion in an embodiment, and the addition of the mixture solution enables the even dispersion of the single crystal sapphire whiskers in the dispersion; and when the electroconductive polymer is contained, the single crystal sapphire whiskers and the electroconductive polymer are further evenly dispersed in the dispersion to prevent the aggregation of the single crystal sapphire whiskers and to increase the sufficient contact between the single crystal sapphire whiskers and the graphene, thereby improving the synergistic interaction effect of the single crystal sapphire whiskers and the graphene during the formation of the graphene composite film, and improving the toughness, mechanical strength and high-temperature stability of the graphene composite film.

Further, the concentration of the graphene oxide solution can be but not limited to 0.1mg/mL-1mg/L; and the size and layer number of the graphene oxide can be as stated above for the graphene in the graphene composite film, and detailed description thereof will be omitted for the sake of economy. Furthermore, the graphene oxide can be directly purchased in the market or prepared with the conventional Hummers method.

To fully disperse the graphene oxide, ultrasonic treatment can be combined in the process of preparing the dispersion. The ultrasonic treatment is preferably to fully disperse the dispersion.

In Step S02, coating methods such as brushing, spraying and filtering can be used to form the film from the dispersion. Furthermore, the thickness and other factors of the film layer can be controlled and adjusted via film forming conditions such as time and usage amount. Furthermore, to increase the compactness of the graphene oxide composite film, the formed film layer is applied with pressure for direct setting after the film formation, and then is dried, wherein the pressure applied can be but not limited to 100MP, for example, more than 30MP.

In Step S03, the graphene oxide composite film can be reduced with a conventional method for reducing the graphene oxide, for example, in an embodiment, the reducing is to treat the graphene oxide composite film with a hydrogen thermal reduction method or an HI-solution reduction method. In a particular embodiment, the hydrogen reduction method comprises raising the temperature of the graphene oxide composite film to 1050°C at a ratio of 1-10°C /min under the protection of a gas mixture of hydrogen and nitrogen, holding the temperature for 0.1-2h, and naturally cooling to room temperature. At this point, when the graphene oxide composite film contains the electroconductive polymer, the graphene oxide is reduced into graphene in the process of hydrogen thermal reduction, while the electroconductive polymer is carbonized into in-situ carbon, thereby sintering the graphene, the single crystal sapphire whiskers and the in-situ formed carbon into a whole to form the graphene composite film containing the in-situ carbon.

In another particular embodiment, the HI-solution reduction method comprises putting the graphene oxide composite film in a HI solution with the concentration of 10-80wt% for reacting at 30-200°C for 0.5-5h to fully reduce the graphene oxide into graphene, i.e. reducing the graphene oxide composite film into the graphene composite film.

Therefore, the preparation method of the graphene composite film above is effective for evenly dispersing the single crystal sapphire whiskers and evenly blending the same in the substrate film layer formed from the graphene, thereby achieving a synergistic interaction effect between the two to endow the prepared graphene composite film with excellent toughness, electroconductivity and thermal resistance at the same time. Moreover, the preparation method has easily controllable conditions and good reproducibility, and the graphene composite film prepared therewith has stable performance, thereby reducing cost.

For another aspect, an embodiment of the invention further provides an electrode based on the graphene composite film and the preparation method thereof as described above. The electrode comprises the graphene composite film described above or the graphene composite film prepared with the preparation method described above. In this way, with the graphene composite film, the electrode thus has stable structure, low internal resistance, and excellent electroconductivity, thermoconductivity, cycle performance and rate performance during usage as well as charging and discharging.

In an embodiment, the electrode may be an electrode of a conventional structure in a conventional lithium ion battery or capacitor, for example, the electrode comprises a current collector and an electrode active layer bonded on the surface of the current collector. Further, the current collector comprises the graphene composite film, and the electrode active layer is bonded on the surface of the current collector containing the graphene composite film. Therefore, when the electrode active layer is a positive active layer, the electrode is a positive electrode; and when the electrode active layer is a negative active layer, the electrode is a negative electrode.

In another embodiment, the electrode may be a pole piece that the graphene composite film as described above is cut to be used as, and at this point, the pole piece is a negative electrode of a lithium ion battery or a pole piece of a capacitor or thin-film lithium ion battery.

Therefore, the electrode can be applied to lithium ion batteries and capacitors based on the characteristics thereof. The energy storage devices such as lithium ion batteries and capacitors are therefore endowed with excellent cycle performance and rate performance.

The invention is now further illustrated in detail by taking the graphene composite film and the preparation method thereof as an example.

### Embodiment 1

The present embodiment provides a graphene composite film modified by single crystal sapphire whiskers and a preparation method thereof. The graphene composite film comprises graphene, single crystal sapphire whiskers and in-situ formed carbon, with the weight ratio of the graphene to the single crystal sapphire whiskers as 1:0.2, and the weight ratio of the graphene to the in-situ carbon as 1:0.3.

The preparation method of the graphene composite film comprises the following steps:
S11, preparing the prepared graphene oxide [GO] into 1000mL of solution having the concentration of 2mg/mL, adding the single crystal sapphire whiskers into the graphene oxide solution at the weight ratio of the graphene oxide to the single crystal sapphire whiskers as 1:0.2, adding a polyethylene oxide carbon source into the graphene oxide solution at the weight ratio of the graphene to the in-situ carbon as 1:0.3, and then performing ultrasonic mixing to fully disperse all the components to form a dispersion;
S12, performing vacuum suction filtration on the dispersion, then applying 50MP of pressure to a filter membrane for 3 hours, and then fully drying to obtain a graphene oxide composite film;
S13, raising the temperature of the graphene oxide composite film to 1050°C at a ratio of 1-10°C/min, holding the temperature for 0.1-2h, and naturally cooling to room temperature to obtain the graphene oxide composite film.

### Embodiment 2

The present embodiment provides a graphene composite film modified by single crystal sapphire whiskers and a preparation method thereof. The graphene composite film comprises graphene, single crystal sapphire whiskers and polyethylene oxide, with the weight ratio of the graphene to the single crystal sapphire whiskers as 1:0.2, and the weight ratio of the graphene to the polyethylene oxide as 1:0.3.

The preparation method of the graphene composite film comprises the following steps:
S11, preparing the prepared graphene oxide [GO] into 1000mL of solution having the concentration of 2mg/mL, adding the single crystal sapphire whiskers into the graphene oxide solution at the weight ratio of the graphene oxide to the single crystal sapphire whiskers as 1:0.2, adding the polyethylene oxide into the graphene oxide solution at the weight ratio of the graphene to the in-situ carbon as 1:0.3, and then performing ultrasonic mixing to fully disperse all the components to form a dispersion;,
S12, performing vacuum suction filtration on the dispersion, then applying 50MP of pressure to a filter membrane for 3 hours, and then fully drying to obtain a graphene oxide composite film;
S13, putting the graphene oxide composite film in a HI solution with the concentration of 10-80wt% for reacting at 80°C for 0.5-5h, obtaining the graphene composite film.

### Embodiment 3

The present embodiment provides a graphene composite film modified by single crystal sapphire whiskers and a preparation method thereof. The graphene composite film comprises graphene, single crystal sapphire whiskers and polyethylene oxide, with the weight ratio of the graphene to the single crystal sapphire whiskers as 1:0.02, and the weight ratio of the graphene to the mixture polymer of polyethylene glycol succinate and polyethylene glycol imine as 1:0.1.

The preparation method of the graphene composite film comprises the following steps:
S11, preparing the prepared graphene oxide [GO] into 1000mL of solution having the concentration of 2mg/mL, adding the single crystal sapphire whiskers into the graphene oxide solution at the weight ratio of the graphene oxide to the single crystal sapphire whiskers as 1:0.02, adding the mixture polymer of polyethylene glycol succinate and polyethylene glycol imine into the graphene oxide solution at the weight ratio of the graphene to the in-situ carbon as 1:0.1, and then performing ultrasonic mixing to fully disperse all the components to form a dispersion;,
S12, performing vacuum suction filtration on the dispersion, then applying 100MP of pressure to a filter membrane for 3 hours, and then fully drying to obtain a graphene oxide composite film;
S13, putting the graphene oxide composite film in a HI solution with the concentration of 10-80wt% for reacting at 80°C for 0.5-5h, obtaining the graphene composite film.

### Embodiment 4

The present embodiment provides a graphene composite film modified by single crystal sapphire whiskers and a preparation method thereof. The graphene composite film comprises graphene, single crystal sapphire whiskers and polyethylene oxide, with the weight ratio of the graphene to the single crystal sapphire whiskers as 1:0.2, and the weight ratio of the graphene to the polyethylene oxide as 1:0.3.

The preparation method of the graphene composite film comprises the following steps:
S11, preparing the prepared graphene oxide [GO] into 1000mL of solution having the concentration of 2mg/mL, adding the single crystal sapphire whiskers into the graphene oxide solution at the weight ratio of the graphene oxide to the single crystal sapphire whiskers as 1:0.2, adding a polyethylene oxide into the graphene oxide solution at the weight ratio of the graphene to the in-situ carbon as 1:0.3, adding a mixture solution of dimethylformamide, ethanol and polyglycol ether into the graphene oxide solution at the weight ratio of the 10:5:2, and then performing ultrasonic mixing to fully disperse all the components to form a dispersion;
S12, performing vacuum suction filtration on the dispersion, then applying 50MP of pressure to a filter membrane for 3 hours, and then fully drying to obtain a graphene oxide composite film;
S13, putting the graphene oxide composite film in a HI solution with the concentration of 10-80wt% for reacting at 80°C for 0.5-5h, obtaining the graphene composite film.

### Comparative Example 1

The present comparative example provides a graphene composite film and a preparation method thereof. The graphene composite film comprises graphene and polyethylene oxide, with the weight ratio of the graphene to the polyethylene oxide as 1:0.3. The graphene composite film is prepared with reference to the method in Embodiment 2.

Relevant Performance Tests:
1. The graphene with the same controlled thickness as provided in each of Embodiments 1 to 4 and Comparative Example 1 above is subjected to relevant performance tests below, with the test results as shown in Table 1 below.

**Table 1**

| | Repeated Bending Resisting Times | Elongation at Break % | Strength MP | Electrocondu ctivity S/cm | Thermocondu ctivity W/mK |
|---|---|---|---|---|---|
| Embodiment 1 | 2410 | 18% | 90 | 9740 | 2500 |
| Embodiment 2 | 2600 | 20% | 85 | 9580 | 2580 |
| Embodiment 3 | 2660 | 20% | 85 | 9620 | 2630 |
| Embodiment 4 | 2813 | 21% | 88 | 9700 | 2710 |
| Comparative Example 1 | 1260 | 16% | 70 | 9600 | 1900 |

As can be known from Table 1, by dispersing and blending the single crystal sapphire whiskers in the graphene substrate film layer, the graphene composite film according to the embodiments of the invention achieves excellent toughness, mechanical strength and electro- and thermoconductivity by means of the synergistic effect of the two, and is significantly improved particularly in terms of toughness, thermoconductivity and mechanical strength.
2. The graphene with the same controlled thickness as provided in each of Embodiments 1 to 4 and Comparative Example 1 above is directly cut to be used as an electrode for a supercapacitor, and is assembled to form an all-solid-state flexible supercapacitor. All the supercapacitors are subjected to relevant performance tests below under the same conditions, with the test results shown in Table 2 below.

**Table 2**

| Performance | Embodiments | | | | Comparative Example |
|---|---|---|---|---|---|
| | 1 | 2 | 3 | 4 | 1 |
| Specific Capacity after 1000 cycles [F/g] | 317.1 | 325.8 | 331.4 | 340.1 | 249.0 |

As can be known from Table 2, the graphene composite film according to the embodiments of the invention exhibits structural stability, low internal resistance, and excellent thermoconductivity, cycle performance and rate performance after being applied to the electrode, effectively improving the electrochemical performances such as cycle performance of the energy storage devices such as the supercapacitor.

The description above is merely the preferred embodiments of the invention, but not intended to limit the invention. Any modifications, equivalent substitutions, improvements and the like made within the spirit and principle of the invention shall be construed to be incorporated within the protection scope of the invention.

## Claims

1. A graphene composite film modified by single crystal sapphire whiskers, comprising graphene, further comprising single crystal sapphire whiskers, wherein the graphene forms a substrate film layer, the single crystal sapphire whiskers are dispersed in the substrate film layer, and the content by weight of the graphene is greater than that of the single crystal sapphire whiskers.

2. The graphene composite film according to Claim 1, wherein a weight ratio of the single crystal sapphire whiskers to the graphene is [0.01-0.3]:1.

3. The graphene composite film according to Claim 1, further comprising an electroconductive polymer, wherein a weight ratio of the electroconductive polymer to the graphene is [0.05-0.5]:1.

4. The graphene composite film according to Claim 3, wherein the electroconductive polymer is at least one of polyethylene oxide, polyethylene glycol succinate, polyethylene glycol imine, polyacetylene, polyphthalocyanine copper, polyaniline, poly(p-phenylene sulfide), thiophene, polypyrrole, and polyquinoline.

5. A preparation method of a graphene composite film modified by single crystal sapphire whiskers, comprising the following steps:
dispersing single crystal sapphire whiskers into a graphene oxide solution to prepare a dispersion,
wherein the concentration by weight of graphene oxide is greater than that of the single crystal sapphire whiskers;
forming a film from the dispersion to obtain a graphene oxide composite film; and
reducing the graphene oxide composite film.

6. The preparation method according to Claim 5, wherein the step of preparing the dispersion further comprises a substep of adding an electroconductive polymer into the graphene oxide solution; and/or
further comprises a substep of adding a mixture solution of dimethylformamide, ethanol and polyethylene glycol ether at a weight ratio of 10:[4-7]:[0.5-3] into the graphene oxide solution.

7. The preparation method according to Claim 5 or 6, wherein the reducing is to treat the graphene oxide composite film with a hydrogen thermal reduction method or an HI-solution reduction method.

8. An electrode, comprising the graphene composite film of any one of Claims 1 to 4 or the graphene composite film prepared with the preparation method of any one of Claims 5 to 7.

9. The electrode according to Claim 8, comprising a current collector and an electrode active layer bonded on the surface of the current collector, wherein the current collector comprises the graphene composite film; or
the electrode is formed by cutting the graphene composite film.

10. An application of the electrode according to Claim 8 or 9 to lithium ion batteries and capacitors.
